# EUROPÄISCHE PATENTANMELDUNG

(11) **EP 4 610 910 A1**
(43) Veröffentlichungstag der Anmeldung: **03.09.2025**
(21) Anmeldenummer: 24160935.3
(22) Anmeldetag: 01.03.2024
(51) Int. Cl.: G06Q 10/20, G05B 19/418, H04L 67/12

(54) **KOMMUNIKATIONSVERFAHREN MIT DIGITALEN ZWILLINGEN**

(71) Anmelder: Siemens Aktiengesellschaft, 80333 München (DE)
(72) Erfinder: Drumm, Oliver, 76344 Eggenstein-Leopoldshafen (DE)
(74) Vertreter: Siemens Patent Attorneys

(57) **Zusammenfassung**

Vorgeschlagen wird ein Verfahren zur Kommunikation zwischen einem technischen Anfragesystem (6) und einem physikalischen Objekt, umfassend:
a) Durch das technische Anfragesystem (6), Richten einer Anfrage für Informationen an eine Schnittstelle (7) eines Informationsdienstes, wobei die Schnittstelle (7) als eine Kommunikationsschnittstelle einer Verwaltungsschale gemäß den Spezifikationen der DIN EN IEC 63278-1 mit Stand zum Anmeldezeitpunkt ausgebildet ist, und wobei der Informationsdienst auf einem ersten Computer (2) implementiert ist und wenigstens eine Referenz auf einen digitalen Zwilling eines physikalischen Objektes aufweist, welcher digitale Zwilling zu dem physikalischen Objekt gehörige Daten umfasst, und wobei der digitale Zwilling auf einem zweiten Computer (3) implementiert ist, der unabhängig von dem ersten Computer (2) ist,
b) Abfrage der von dem technischen Anfragesystem (6) angefragten Informationen von dem zweiten Computer (3) mit dem digitalen Zwilling durch den auf dem ersten Computer (2) implementierten Informationsdienst,
c) Weitergabe der abgefragten Informationen an das technische Abfragesystem (6) durch den Informationsdienst.

## Beschreibung

Die Erfindung betrifft ein Verfahren zur Kommunikation zwischen einem technischen Anfragesystem und einem physikalischen Objekt. Außerdem betrifft die Erfindung einen Computer, auf dem ein Informationsdienst implementiert ist. Zudem betrifft die Erfindung ein Computersystem und eine technische Anlage.

Informationen spielen eine immer wichtigere Rolle und Daten sind zu einer wichtigen Ressource in Unternehmen geworden. In den Unternehmen entstehen in unterschiedlichen Systemen Informationen zu einem Asset. Unter einem "Asset" wird dabei eine Ressource verstanden, die einem Unternehmen gehört und zur Erzielung von Einkommen oder anderen Vorteilen verwendet werden kann. Es kann sich um physische Güter wie Gebäude, Maschinen, Fahrzeuge oder Inventar. Bei der Produktentwicklung, der Fertigung, der Inbetriebnahme, dem Betrieb und dem Rückbau des Assets entstehen Informationen bezüglich des Assets. Diese Informationen werden für unterschiedlichste Anwendungen benötigt.

Im Rahmen der Industrie 4.0 Initiative werden die Informationen eines Assets mit Hilfe der Verwaltungsschale (Asset Administration Shell - AAS, vgl. DIN EN IEC 63278-1) standardisiert beschrieben. Eine Herausforderung besteht dabei darin, die Informationen aus den unterschiedlichen Systemen zu entnehmen und als Verwaltungsschale den Anwendern zur Verfügung zu stellen. Zu den informationshaltenden Quellsystemen gehören beispielsweise Produktentwicklungswerkzeuge, Produktinformationsmanagementsysteme, Anlagenplanungswerkzeuge oder Leitsysteme für technische Anlagen.

Das Konzept der Verwaltungsschale (vgl. DIN EN IEC 63278-1) sieht vor, die Informationen eines Assets innerhalb von Teilmodellen mittels definierter Merkmale und Strukturen zu beschreiben. Dabei bildet die Verwaltungsschale eines Assets eine Klammer um alle Teilmodelle. So existieren z. B. Teilmodelle zum digitalen Typenschild, zur Übergabedokumentation und zu den technischen Daten.

Für ein Asset werden in der Regel mehrere Verwaltungsschalen in Abhängigkeit der Verantwortlichkeit der Inhalte entstehen. Beispielsweise gibt es eine Verwaltungsschale beim Hersteller, eine beim Planer und eine beim Anwender.

Nicht nur die Teilmodelle als Ganzes, sondern auch ihre Inhalte befinden sich meist auf unterschiedlichen Systemen einer technischen Anlage eines Unternehmens. Diese müssen zusammengeführt und orchestriert werden. Im Konzept der Verwaltungsschale sind Mechanismen zum Datenaustausch definiert. Es existiert eine standardisierte Programmierschnittstelle (API), um Daten von einem Service zu erfragen.

Der Erfindung liegt die Aufgabe zugrunde, ein Verfahren zum Übermitteln von Informationen anzugeben, welches besonders effizient und einfach anwendbar ist.

Die zuvor formulierte Aufgabe wird durch ein Verfahren zur Kommunikation zwischen einem technischen Anfragesystem und einem physikalischen Objekt gemäß Anspruch 1 gelöst. Außerdem wird die Aufgabe gelöst durch einen Computer, auf dem ein Informationsdienst implementiert ist, nach Anspruch 10. Zudem wird die Aufgabe gelöst durch ein Computersystem mit einem ersten Computer oder einer cloudbasierten Rechenumgebung, und mit einem zweiten Computer nach Anspruch 11. Außerdem wird die Aufgabe durch eine technische Anlage, insbesondere Fertigungs- oder Prozessanlage, nach Anspruch 12 gelöst. Vorteilhafte Weiterbildungen der Erfindung sind Gegenstand der abhängigen Ansprüche.

Ein erfindungsgemäßes Verfahren zur Kommunikation zwischen einem technischen Anfragesystem und einem physikalischen Objekt umfasst die folgenden Verfahrensschritte:
a) Durch das technische Anfragesystem, Richten einer Anfrage für Informationen an eine Schnittstelle eines Informationsdienstes, wobei die Schnittstelle als eine Kommunikationsschnittstelle einer Verwaltungsschale gemäß den Spezifikationen der DIN EN IEC 63278-1 mit Stand zum Anmeldezeitpunkt ausgebildet ist, und wobei der Informationsdienst auf einem ersten Computer implementiert ist und wenigstens eine Referenz auf einen digitalen Zwilling eines physikalischen Objektes aufweist, welcher digitale Zwilling zu dem physikalischen Objekt gehörige Daten umfasst, und wobei der digitale Zwilling auf einem zweiten Computer implementiert ist, der unabhängig von dem ersten Computer ist,
b) Abfrage der von dem technischen Anfragesystem angefragten Informationen von dem zweiten Computer mit dem digitalen Zwilling durch den auf dem ersten Computer implementierten Informationsdienst,
c) Weitergabe der abgefragten Informationen an das technische Abfragesystem durch den Informationsdienst.

Ein physikalisches Objekt kann eine Maschine, einen Messumformer, einen Aktor, einen Heizer, eine Pumpe oder einen Tank darstellen.

Das technische Anfragesystem kann beispielsweise mittels eines Computers, Smartphones oder Tablets realisiert sein und ist dazu ausgebildet, eine Anfrage bezüglich/für Informationen an eine Schnittstelle eines Informationsdienstes zu richten. Diese Anfrage erfolgt über an sich bekannte Kommunikationswege und -protokolle. Der Informationsdienst ist auf einem ersten Computer implementiert und realisiert eine Kommunikationsschnittstelle gemäß den Spezifikationen der Norm DIN EN IEC 63278-1 mit Stand zum Anmeldezeitpunkt der vorliegenden Patentanmeldung. In der betreffenden Norm ist dabei, unter anderem, spezifiziert, wie eine solche Kommunikationsschnittstelle ausgebildet sein muss und welche Mindestmerkmale sie aufweisen muss.

Der Computerdienst weist eine Referenz auf einen digitalen Zwilling eines physikalischen Objektes auf. Unter einem solchen digitalen Zwilling wird vorliegend eine digitale Abbildung von Daten verstanden, die zu dem physikalischen Objekt gehörig sind. Der digitale Zwilling ist dabei auf einem zweiten, von dem ersten Computer und dem Anfragesystem getrennten und unabhängigen Computer implementiert. Vorzugsweise ist der digitale Zwilling gemäß den Spezifikationen der DIN EN IEC 63278-1 mit Stand zum Anmeldezeitpunkt ausgebildet.

Der Informationsdienst fragt auf die Anfrage des Abfragesystems hin und unter Nutzung der ihm bekannten Referenzen die Informationen von dem digitalen Zwilling ab und gibt diese an das technische Abfragesystem weiter.

Das erfindungsgemäße Verfahren bringt die folgenden Vorteile mit sich: Zunächst wird ein einheitlicher Zugang für das anfragende Anfragesystem bereitgestellt. Die internen heterogenen Strukturen der Systeme sind für das Anfragesystem dabei unsichtbar. Der Informationsdienst dient als Vermittler zu dem oder den unterlagerten Systemen. Dadurch muss kein zentrales System existieren, das alle Informationen zu allen Quellsystemen kennt. Zudem ist ein dynamisches Ändern der Quellsysteme durch eine entsprechende Modifizierung des Informationsdienstes einfach möglich.

Die Erfindung ist nicht auf einen einzigen zweiten Computer beschränkt. Vielmehr kann eine Vielzahl von zweiten Computern vorhanden sein, von denen der Informationsdienst die angefragten Informationen beziehen kann.

Der erste Computer, auf dem der Informationsdienstes implementiert ist, kann einen Informationsserver darstellen, welcher nach dem Server-Client Prinzip die Informationen von dem zweiten Computer bezieht.

Bevorzugt umfassen die zu dem physikalischen Objekt gehörigen Daten Beschreibungsdaten. Diese Beschreibungsdaten können beispielsweise digitale Typenschilder, Übergabedokumentationen oder weitere technische Daten sein.

Besonders bevorzugt umfassen die zu dem physikalischen Objekt gehörigen Daten Sensorwerte, Zustandsänderungen oder Diagnosedaten.

Im Rahmen einer bevorzugten Weiterbildung der Erfindung weist der Informationsdienst eine zweite Referenz auf einen zweiten digitalen Zwilling eines zweiten physikalischen Objektes auf, welcher zweite digitale Zwilling zu dem zweiten physikalischen Objekt gehörige Daten umfasst. Dabei ist der zweite digitale Zwilling auf einem dritten Computer implementiert, der unabhängig von dem ersten und dem zweiten Computer ist. Die Abfrage der von dem technischen Anfragesystem angefragten Informationen erfolgt dabei von dem zweiten Computer mit dem digitalen Zwilling und von dem dritten Computer mit dem zweiten digitalen Zwilling durch den auf dem ersten Computer implementierten Informationsdienst. Der Informationsdienst gibt dann die von dem zweiten Computer und dem dritten Computer abgefragten Informationen zusammengeführt an das technische Abfragesystem weiter. Der Informationsdienst ist somit dazu ausgebildet, in Abhängigkeit des Inhaltes der Anfrage zu entscheiden, von welchem Computer/digitalem Zwilling er die angefragten Informationen erhalten kann.

Besonders bevorzugt weist der Informationsdienst eine zweite Referenz auf einen zweiten digitalen Zwilling eines zweiten physikalischen Objektes auf, welcher zweite digitale Zwilling zu dem zweiten physikalischen Objekt gehörige Daten umfasst. Dabei ist der zweite digitale Zwilling auf einem dritten Computer implementiert, der unabhängig von dem ersten und dem zweiten Computer ist. Dabei weist der digitale Zwilling auf dem zweiten Computer Daten eines ersten Teilmodells und der digitale Zwilling auf dem dritten Computer Daten eines zweiten, von dem ersten Teilmodell verschiedenen Teilmodells auf. Diese Teilmodelle sind bevorzugt Teilmodelle gemäß der Spezifikationen der DIN EN IEC 63278-1 mit Stand zum Anmeldezeitpunkt. Die Abfrage der von dem technischen Anfragesystem angefragten Informationen erfolgt dabei von dem zweiten Computer mit dem digitalen Zwilling und von dem dritten Computer mit dem zweiten digitalen Zwilling durch den auf dem ersten Computer implementierten Informationsdienst. Dabei führt der Informationsdienst die von dem zweiten Computer und dem dritten Computer abgefragten Informationen zusammen und gibt diese als eine komplette Information an das technische Abfragesystem weiter.

Die zuvor erläuterte Aufgabe wird zudem gelöst durch einen Computer, auf dem ein Informationsdienst implementiert ist, der dazu ausgebildet ist, für ein Verfahren zur Kommunikation zwischen einem technischen Anfragesystem und einem physikalischen Objekt wie zuvor erläutert verwendet zu werden.

Außerdem wird die Aufgabe gelöst durch eine cloudbasierte Rechenumgebung, auf der ein Informationsdienst implementiert ist, der dazu ausgebildet ist, für ein Verfahren zur Kommunikation zwischen einem technischen Anfragesystem und einem physikalischen Objekt wie zuvor erläutert verwendet zu werden. Cloudbasiert meint dabei ein Rechnernetzwerk mit onlinebasierten Speicher- und Serverdiensten, welches üblicherweise auch Cloud (engl. Wolke) oder Cloud-Plattform bezeichnet wird. Die in der Cloud gespeicherten Daten sind online zugänglich, sodass über das Internet Zugriff auf zentrale Datenarchive verfügbar sind.

Die Aufgabe wird außerdem gelöst durch ein Computersystem mit einem ersten Computer wie zuvor erläutert oder einer cloudbasierten Rechenumgebung wie zuvor erläutert, und wenigstens einem zweiten Computer mit einem hierauf implementierten digitalen Zwilling eines physikalischen Objektes.

Außerdem wird die Aufgabe gelöst durch eine technische Anlage, insbesondere Fertigungs- oder Prozessanlage, die einen ersten Computer wie zuvor erläutert, einen zweiten Computer mit einem hierauf implementierten digitalen Zwilling eines physikalischen Objektes und das physikalische Objekt umfasst.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem im vorliegenden Fall vorgesehenen Operator Station Server und dem Operator Station Client Sensoren zur Ermittlung von Messwerten sowie verschiedene Aktoren umfassen. Zudem kann das Leitsystem sogenannte prozessnahe Komponenten, die zur Ansteuerung der Aktoren bzw. Sensoren dienen, aufweisen. Darüber hinaus kann das Leitsystem u.a. Mittel zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
FIG 1ein erstes Computersystem mit einem Anfragesystem in einer Prinzipskizze;
FIG 2ein zweites Computersystem mit einem Anfragesystem in einer Prinzipskizze;
FIG 3ein drittes Computersystem mit einem Anfragesystem in einer Prinzipskizze; und
FIG 4ein viertes Computersystem mit einem Anfragesystem in einer Prinzipskizze.

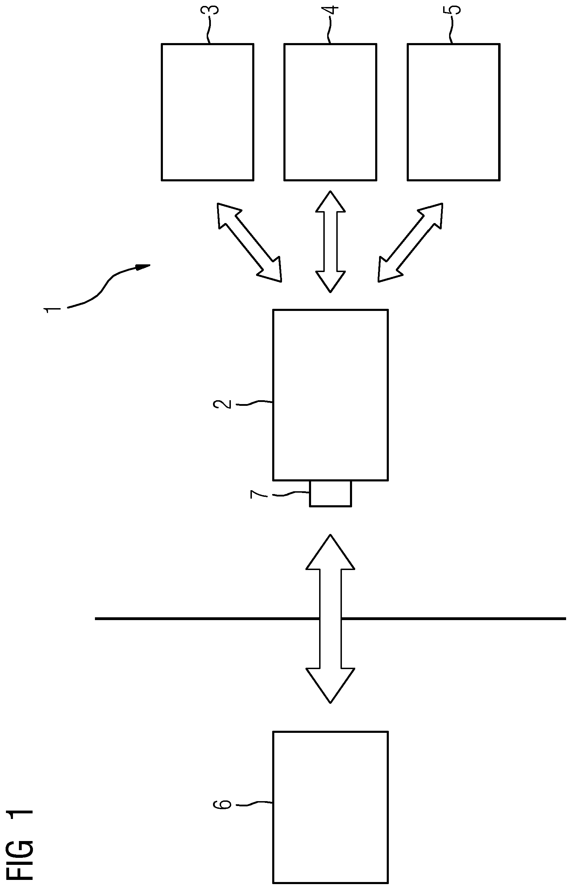

In FIG 1 ist ein Computersystem 1 dargestellt, welches einen ersten Computer 2, einen zweiten Computer 3, einen dritten Computer 4 und einen vierten Computer 5 umfasst. Weiterhin ist in FIG 1 ein Anfragesystem 6 dargestellt.

Auf dem zweiten Computer 2 ist ein digitaler Zwilling eines ersten physikalischen Objektes implementiert. Der digitale Zwilling umfasst Daten, die zu dem ersten physikalischen Objekt gehören und die digitaler Natur sind. Bei den Daten kann es sich beispielsweise um Beschreibungsdaten handeln, welche beispielsweise ein technisches / physikalisches Verhalten des physikalischen Objektes beschreiben. Es kann sich bei den Daten aber auch beispielsweise um Sensorwerte, Zustände, Zustandsänderungen oder Diagnosedaten handeln.

Analog ist auf dem dritten Computer 3 ein digitaler Zwilling eines zweiten physikalischen Objektes und auf dem vierten Computer 4 ein digitaler Zwilling eines dritten physikalischen Objektes implementiert. Bei den physikalischen Objekten handelt es sich beispielsweise um eine Maschine, einen Messumformer, einen Aktor, einen Heizer, eine Pumpe oder einen Tank. Die Computer 2, 3, 4 können über eine Datenkommunikationsleitung mit den jeweiligen physikalischen Objekten verbunden sein, um die Daten automatisiert in die jeweiligen digitalen Zwillinge zu übermitteln. Es ist aber auch möglich, dass keine direkte Datenkommunikationsverbindung zwischen den physikalischen Objekten und den Computern 2, 3, 4 besteht und die Daten bezüglich der physikalischen Objekte auf anderem Wege den digitalen Zwilling zur Verfügung gestellt worden sind, insbesondere manuell.

Die jeweiligen digitalen Zwillinge auf dem zweiten, dritten und vierten Computer 2, 3, 4 sind gemäß den Spezifikationen der DIN EN IEC 63278-1 mit Stand zum Anmeldezeitpunkt ausgebildet. Mit anderen Worten folgen die digitalen Zwillinge den Konzepten der Verwaltungsschale.

Auf dem als Informationsserver ausgebildeten ersten Computer 2 ist ein Informationsdienst implementiert. Der Informationsdienst weist Referenzen auf die digitalen Zwillinge auf dem zweiten, dritten und vierten Computer 2, 3, 4 auf. Der erste Computer 2 ist mit dem zweiten Computer 3, dem dritten Computer 4 und dem vierten Computer 5 jeweils kommunikativ verbunden, was bedeutet, dass er mit diesen (digitale) Daten austauschen kann. Der erste Computer 2 weist eine Schnittstelle 7 auf, die als eine Kommunikationsschnittstelle einer Verwaltungsschale gemäß den Spezifikationen der DIN EN IEC 63278-1 mit Stand zum Anmeldezeitpunkt ausgebildet ist.

Das technische Anfragesystem 6 kann beispielsweise ein Computer, ein Smartphone oder ein Tablet sein.

Im Folgenden wird der Ablauf eines erfindungsgemäßen Verfahrens erläutert: In einem ersten Schritt richtet das technische Anfragesystem 6 als Client eine Anfrage für Informationen an die Schnittstelle 7 des Informationsdienstes auf dem als Informationsserver ausgebildeten ersten Computer 2. Hierzu stellt das technische Anfragesystem 6 eine hier nicht näher erläuterte (drahtlose oder drahtgebundene) Kommunikationsverbindung mit dem ersten Computer 2 her. Das Ziel der Kontaktaufnahme ist das Erlangen bestimmter Informationen.

Der Informationsdienst 2 fragt bei dem zweiten Computer 3, dem dritten Computer 4 und dem vierten Computer 5 jeweils nach, ob dieser ihm die angefragten Informationen übermitteln kann. Die angefragten Informationen werden dann an den Informationsdienst auf dem ersten Computer 2 übermittelt. In FIG 1 ist der Fall skizziert, dass die digitalen Zwillinge auf dem zweiten Computer 3, dem dritten Computer 4 und dem vierten Computer 5 jeweils eine separate, voneinander unabhängige Verwaltungsschale gemäß den Spezifikationen der DIN EN IEC 63278-1 mit Stand zum Anmeldezeitpunkt sind. Die angefragten Informationen betreffen in diesem Beispiel Teil der ersten Veraltungsschale auf dem zweiten Computer 3, der zweiten Verwaltungsschale auf dem dritten Computer 4 und der dritten Verwaltungsschale auf dem vierten Computer 5. Der jeweilige Teil der Informationen wird von dem zweiten Computer 3, dem dritten Computer 4 und dem vierten Computer 5 an den ersten Computer 2 übermittelt. Der Informationsdienst führt die erhaltenen Informationen zusammen. Die angefragten Informationen werden in einem letzten Schritt an das anfragende technische Anfragesystem 6 übermittelt.

Bei diesem und allen weiteren beschrieben Ausführungsbeispielen "sieht" das technische Anfragesystem 6 eine einzige Kommunikationsschnittstelle gemäß den Spezifikationen der DIN EN IEC 63278-1 mit Stand zum Anmeldezeitpunkt. Das technische Anfragesystem 6 hat keine Kenntnis über die interne Struktur des Computersystems 1. Die Schnittstelle 7 des ersten Computers 6 sollte über die aktuelle Version gemäß den Spezifikationen der DIN EN IEC 63278-1 verfügen. Bei den Schnittstellen der weiteren Computer 3, 4, 5 des Computersystems 1 ist dies nicht unbedingt nötig. Da es sich bei dem Computersystem 1 um ein in sich geschlossenes System handelt, genügt es vielmehr, wenn dem ersten Computer 2 deren Schnittstellenversionen bekannt sind, so dass er die Anfragen korrekt an die weiteren Computer 3, 4, 5 weitergeben kann.

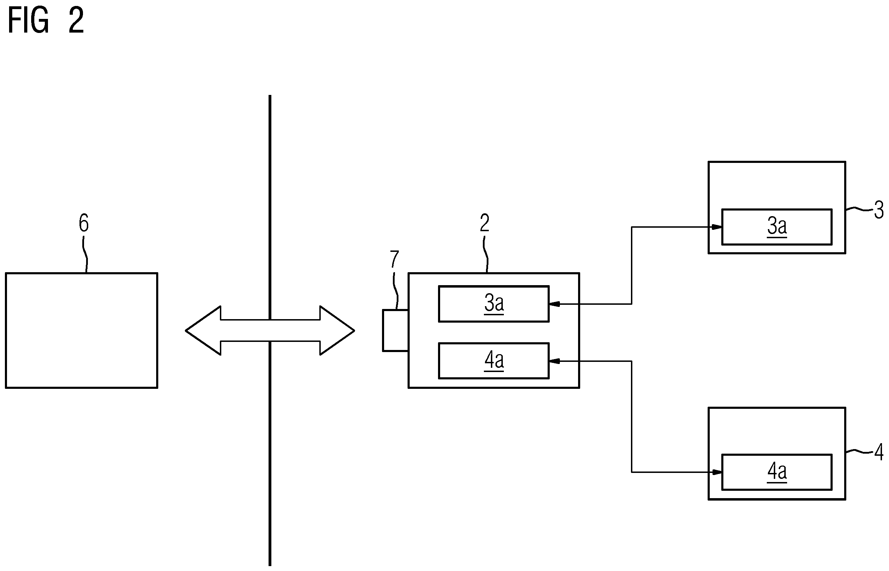

In FIG 2 ist der Fall dargestellt, dass auf dem zweiten Computer 3 ein digitaler Zwilling implementiert ist, der ein erstes Teilmodell 3a einer Verwaltungsschale gemäß den Spezifikationen der DIN EN IEC 63278-1 mit Stand zum Anmeldezeitpunkt umfasst. Auf dem dritten Computer 4 ist ein digitaler Zwilling implementiert ist, der ein zweites Teilmodell 4a der Verwaltungsschale gemäß den Spezifikationen der DIN EN IEC 63278-1 mit Stand zum Anmeldezeitpunkt umfasst. Die Anfrage des technischen Anfragesystems 6 bezieht sich auf Daten aus beiden Teilmodellen 3a, 4a, so dass sowohl der zweite Computer 3 als auch der dritte Computer 4 dem ersten Computer 2 die entsprechenden Informationen zur Verfügung stellt. Der Informationsdienst führt die erhaltenen Informationen zusammen und stellt sie dem technischen Anfragesystem 6 zur Verfügung.

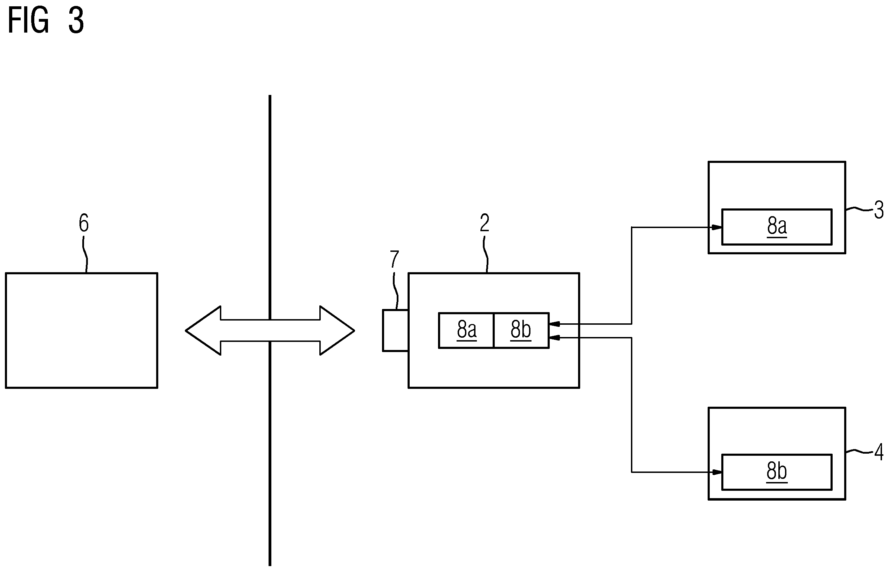

In FIG 3 ist der Fall skizziert, dass auf dem auf dem zweiten Computer 3 ein digitaler Zwilling implementiert ist, der einen ersten Teil 8a eines Teilmodells einer Verwaltungsschale gemäß den Spezifikationen der DIN EN IEC 63278-1 mit Stand zum Anmeldezeitpunkt umfasst. Auf dem dritten Computer 4 ist ein digitaler Zwilling implementiert ist, der einen zweiten Teil 8b des Teilmodells der Verwaltungsschale gemäß den Spezifikationen der DIN EN IEC 63278-1 mit Stand zum Anmeldezeitpunkt umfasst. Die Anfrage des technischen Anfragesystems 6 bezieht sich auf Daten aus beiden Teilen des Teilmodells 8a, 8b, so dass sowohl der zweite Computer 3 als auch der dritte Computer 4 dem ersten Computer 2 die entsprechenden Informationen zur Verfügung stellt. Der Informationsdienst führt die erhaltenen Informationen zusammen und stellt sie dem technischen Anfragesystem 6 zur Verfügung.

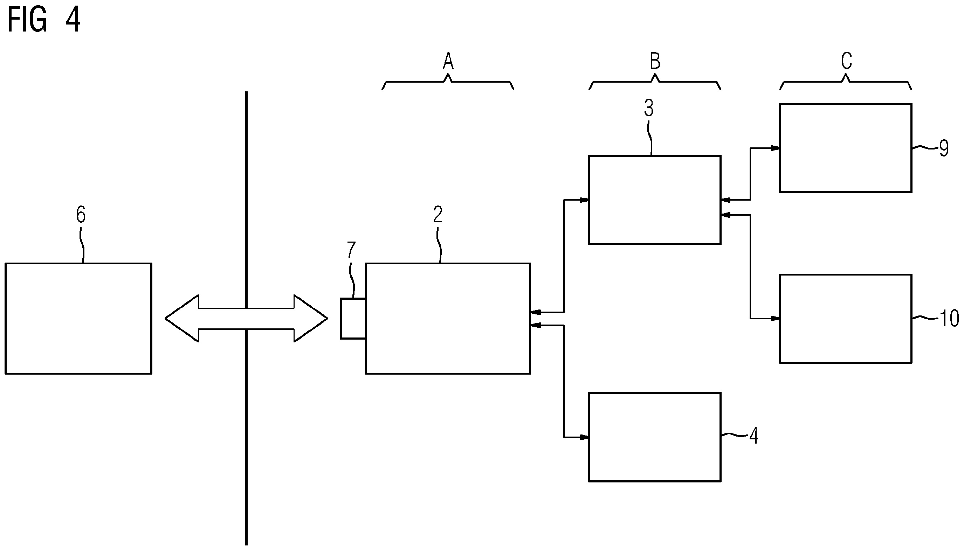

In FIG 4 ist dargestellt, dass auf dem zweiten Computer 3 (wie auch auf den weiteren Computern 4, 5) analog ausgebildete Informationsdienste implementiert sein können, die bei Bedarf die Anfrage des technischen Anfragesystems 6 an zusätzliche Computer 9, 10 weitergeben können. Mit anderen Worten kann das Computersystem 1 eine beliebige Kaskadierung (hier: A, B, C) aufweisen und ist nicht auf zwei Ebenen A, B beschränkt.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Kommunikation zwischen einem technischen Anfragesystem (6) und einem physikalischen Objekt, umfassend:
a) Durch das technische Anfragesystem (6), Richten einer Anfrage für Informationen an eine Schnittstelle (7) eines Informationsdienstes, wobei die Schnittstelle (7) als eine Kommunikationsschnittstelle einer Verwaltungsschale gemäß den Spezifikationen der DIN EN IEC 63278-1 mit Stand zum Anmeldezeitpunkt ausgebildet ist, und wobei der Informationsdienst auf einem ersten Computer (2) implementiert ist und wenigstens eine Referenz auf einen digitalen Zwilling eines physikalischen Objektes aufweist, welcher digitale Zwilling zu dem physikalischen Objekt gehörige Daten umfasst, und wobei der digitale Zwilling auf einem zweiten Computer (3) implementiert ist, der unabhängig von dem ersten Computer (2) ist,
b) Abfrage der von dem technischen Anfragesystem (6) angefragten Informationen von dem zweiten Computer (3) mit dem digitalen Zwilling durch den auf dem ersten Computer (2) implementierten Informationsdienst,
c) Weitergabe der abgefragten Informationen an das technische Abfragesystem (6) durch den Informationsdienst.

2. Verfahren nach Anspruch 1, bei dem der erste Computer (2) einen Informationsserver darstellt.

3. Verfahren nach Anspruch 1 oder 2, bei dem die zu dem physikalischen Objekt gehörigen Daten Beschreibungsdaten umfassen.

4. Verfahren nach einem der vorangegangenen Ansprüche, bei dem die zu dem physikalischen Objekt gehörigen Daten Sensorwerte, Zustandsänderungen oder Diagnosedaten umfassen.

5. Verfahren nach einem der vorangegangenen Ansprüche, bei dem der digitale Zwilling gemäß den Spezifikationen der DIN EN IEC 63278-1 mit Stand zum Anmeldezeitpunkt ausgebildet ist.

6. Verfahren nach einem der vorangegangenen Ansprüche, bei dem das physikalische Objekt eine Maschine, einen Messumformer, einen Aktor, einen Heizer, eine Pumpe oder einen Tank darstellt.

7. Verfahren nach einem der vorangegangenen Ansprüche, bei dem der Informationsdienst eine zweite Referenz auf einen zweiten digitalen Zwilling eines zweiten physikalischen Objektes aufweist, welcher zweite digitale Zwilling zu dem zweiten physikalischen Objekt gehörige Daten umfasst, wobei der zweite digitale Zwilling auf einem dritten Computer (4) implementiert ist, der unabhängig von dem ersten Computer (2) und dem zweiten Computer (3) ist, und bei dem die Abfrage der von dem technischen Anfragesystem angefragten Informationen von dem zweiten Computer (3) mit dem digitalen Zwilling und von dem dritten Computer (4) mit dem zweiten digitalen Zwilling durch den auf dem ersten Computer (2) implementierten Informationsdienst erfolgt, und bei dem der Informationsdienst die von dem zweiten Computer (3) und dem dritten Computer (4) abgefragten Informationen zusammenführt und an das technische Abfragesystem (6) weitergibt.

8. Verfahren nach einem der Ansprüche 1 bis 6, bei dem der Informationsdienst eine zweite Referenz auf einen zweiten digitalen Zwilling eines zweiten physikalischen Objektes aufweist, welcher zweite digitale Zwilling zu dem zweiten physikalischen Objekt gehörige Daten umfasst, wobei der zweite digitale Zwilling auf einem dritten Computer (4) implementiert ist, der unabhängig von dem ersten Computer (2) und dem zweiten Computer (3) ist, und wobei der digitale Zwilling auf dem zweiten Computer (3) Daten eines ersten Teilmodells und der digitale Zwilling auf dem dritten Computer (4) Daten eines zweiten, von dem ersten Teilmodell verschiedenen Teilmodells aufweist, und bei dem die Abfrage der von dem technischen Anfragesystem angefragten Informationen von dem zweiten Computer (3) mit dem digitalen Zwilling und von dem dritten Computer (4) mit dem zweiten digitalen Zwilling durch den auf dem ersten Computer (2) implementierten Informationsdienst erfolgt, und bei dem der Informationsdienst die von dem zweiten Computer (3) und dem dritten Computer (4) abgefragten Informationen zusammenführt und an das technische Abfragesystem (6) weitergibt.

9. Computer (2), auf dem ein Informationsdienst implementiert ist, der dazu ausgebildet ist, für ein Verfahren zur Kommunikation zwischen einem technischen Anfragesystem (6) und einem physikalischen Objekt gemäß einem der vorangegangenen Ansprüche verwendet zu werden.

10. Cloudbasierte Rechenumgebung, auf der ein Informationsdienst implementiert ist, der dazu ausgebildet ist, für ein Verfahren zur Kommunikation zwischen einem technischen Anfragesystem (6) und einem physikalischen Objekt gemäß einem der Ansprüche 1 bis 8 verwendet zu werden.

11. Computersystem (1) mit einem ersten Computer (2) gemäß Anspruch 9 oder einer cloudbasierten Rechenumgebung nach Anspruch 10, und wenigstens einem zweiten Computer (3) mit einem hierauf implementierten digitalen Zwilling eines physikalischen Objektes.

12. Technische Anlage, insbesondere Fertigungs- oder Prozessanlage, die einen ersten Computer (2) gemäß Anspruch 9, einen zweiten Computer (3) mit einem hierauf implementierten digitalen Zwilling eines physikalischen Objektes und das physikalische Objekt umfasst.
